# EUROPEAN PATENT APPLICATION

(11) **EP 2 113 715 A1**
(43) Date of publication of application: **04.11.2009**
(21) Application number: 09400022.1
(22) Date of filing: 30.04.2009
(51) Int. Cl.: F21V 5/02, F21V 7/00, G02B 17/08

(54) **Compact high efficient optic**

(30) Priority: 30.04.2008 US 125912 P
(71) Applicant: Magna International Inc., Aurora, ON L4G 7K1 (CA)
(72) Inventor: Woodward, Ronald O., Yorktown Virigina 23693 (US); McFadden, James R., Oxford Michigan 48371 (US)
(74) Representative: Hössle Kudlek & Partner

(57) **Abstract**

The present invention is directed towards a lighting assembly (10) having a light source (24), at least one optic (12,14,16,18,20,22), and at least one light input surface formed as part of the optic (12,14,16,18,20,22) for receiving substantially all the light produced from the light source (24). The present invention also includes at least one light output surface which is formed as part of the optic (12,14,16,18,20,22) such that light received into the optic by the light input surface is directed by the optic out of the light output surface, thereby producing a desired beam pattern.

## Description

### FIELD OF THE INVENTION

The present invention relates to an optic which uses total internal reflection to produce a high efficiency, high power lighting assembly.

### BACKGROUND OF THE INVENTION

Loss of light in various types of lighting applications is generally known. Light that is produced from a light source, such as incandescent bulbs, and High Intensity Discharge (HID) Lamps is directed in a specific manner because of the application in which the light source is being used. Because of various inefficiencies that occur while using various types of optics, reflectors, and the like to direct the light, a certain amount of light produced from the light source fails to become part of the desired beam pattern.

Some types of lighting applications require a large amount of light, while at the same time use optical systems that are not efficient. High-Intensity Discharge Lamps (HID Lamps) are often used for these types of applications because they produce large amounts of light, and are also energy efficient. However, HID Lamps are also expensive.

Accordingly, there exists a need for a lighting device which has high optical efficiency and is capable of producing the illumination power of an HID Lamp, but can use incandescent light sources resulting in a reduced system cost.

### SUMMARY OF THE INVENTION

The present invention is directed towards a lighting assembly having a light source, at least one optic, and at least one light input surface formed as part of the optic for receiving substantially all the light produced from the light source. The present invention also includes at least one light output surface which is formed as part of the optic such that light received into the optic by the light input surface is directed by the optic out of the light output surface, thereby producing a desired beam pattern.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a perspective view of a first embodiment of a lighting assembly, according to the present invention;

Figure 2 is a sectional side view of the lighting assembly taken along lines 2-2 of Figure 1;

Figure 3 is a sectional top view of the lighting assembly taken along lines 3-3 of Figure 1;

Figure 4 is a first perspective cut-away view of a side optic used in a lighting assembly, according to a first embodiment of the present invention;

Figure 5 is a second perspective cut-away of an optic used in a lighting assembly, according to a first embodiment of the present invention;

Figure 6 is a first perspective cut-away view of a bottom optic used in a lighting assembly, according to a first embodiment of the present invention;

Figure 7 is a second perspective cut-away view of a bottom optic used in a lighting assembly, according to a first embodiment of the present invention;

Figure 8 is a first perspective cut-away view of a front optic used in a lighting assembly, according to a first embodiment of the present invention;

Figure 9 is a second perspective cut-away view of a front optic used in a lighting assembly, according to a first embodiment of the present invention;

Figure 10 is a perspective cut-away view of a side optic, a front optic, and a bottom optic used in a lighting assembly, according to a first embodiment of the present invention;

Figure 11 is a rear cut-away view of a lighting assembly, according to a first embodiment of the present invention;

Figure 12 is a first perspective view of a lighting assembly, according to a second embodiment of the present invention;

Figure 13 is a second perspective view of a lighting assembly, according to a second embodiment of the present invention;

Figure 14 is a front cut-away view of a lighting assembly, according to a second embodiment of the present invention;

Figure 15 is a sectional side view taken along lines 15-15 of Figure 13, according to the present invention; and

Figure 16 is a perspective view of a third embodiment of a lighting assembly, according to a third embodiment of the present invention.

### DETAILED DESCRIPTION OF THE PREFERRED EMBODIMENTS

The following description of the preferred embodiment(s) is merely exemplary in nature and is in no way intended to limit the invention, its application, or uses.

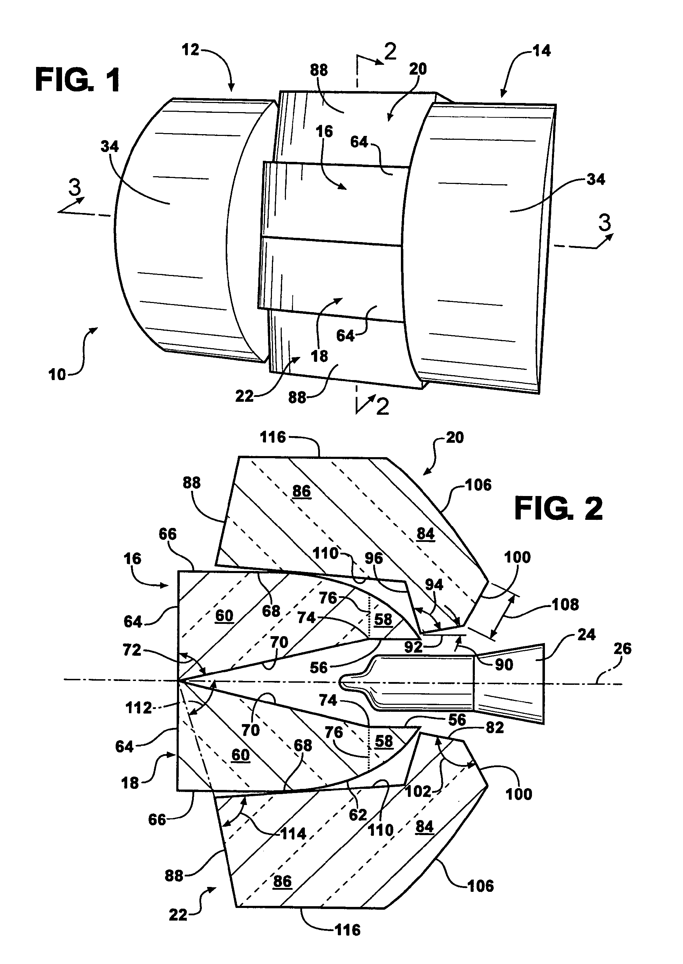

A first embodiment of a lighting assembly according to the present invention is shown in Figures 1-11 generally at 10. The lighting assembly 10 includes several optics which are used for not only producing a desired beam pattern, but also for allowing the lighting assembly 10 to have total internal reflection (TIR).

The lighting assembly 10 includes a first side optic, shown generally at 12, and a second side optic, shown generally at 14. Located between the first side optic 12 and the second side optic 14 is a first front optic, shown generally at 16, and a second front optic, shown generally at 18. The light assembly 10 also includes a top optic, shown generally at 20, and a bottom optic, shown generally at 22. The combination of the optics 12,14,16,18,20,22 acts to receive as much light as possible from a light source 24, and to use the concept of Total Internal Reflection (TIR) so that the lighting assembly 10 is of high-efficiency. In this embodiment, the light source 24 is an incandescent (halogen) lamp, but it is within the scope of the invention that other types of light sources, such as a light emitting diode (LED), or HID may be used as well. The incandescent lamp used as the light source 24 in combination with the optics 12,14,16,18,20,22 is able to produce over 900 lumens to the road in front of a vehicle (when used as an automotive headlamp), while headlamps using typical reflector systems will produce a maximum of only 600 lumens.

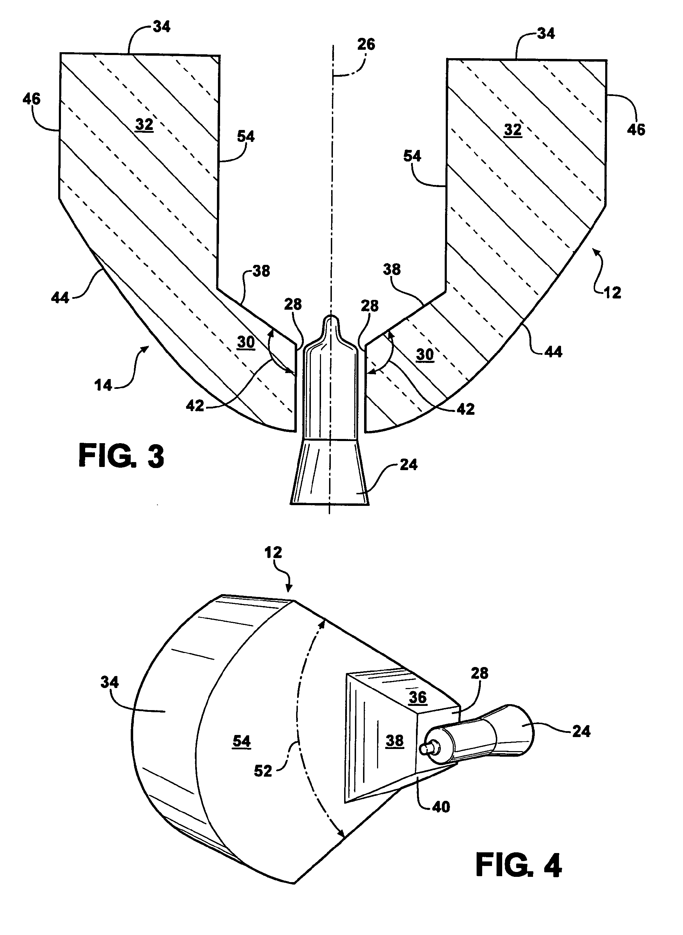

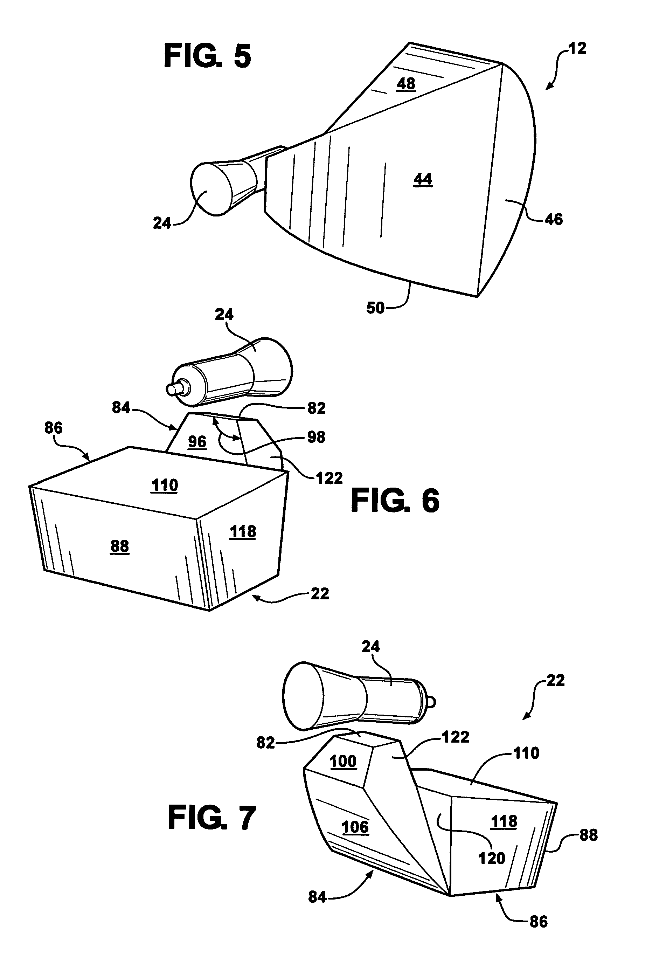

The first side optic 12 and the second side optic 14 are of similar construction, and a substantially mirror images of one another about a first axis 26, best seen when looking at Figure 3, and will be described together. Both of the side optics 12,14 include a light input surface 28 which is parallel to the first axis 26, where the lighting assembly 10 is substantially symmetrical about the first axis 26. The light input surface 28 is part of a smaller or first body portion 30. The side optics 12,14 also include a larger or second body portion 32 which is integrally formed with the first body portion 30. The second body portion 32 includes a light output surface 34, light is directed out of the light output surface 34 to produce at least a portion of the desired beam pattern. The light output surface 34 for each of the side optics 12,14 is substantially hyperbolic in shape. The first body portion 30 also includes three inclined surfaces 36,38,40, each of which extend to the second body portion 32 at a first obtuse angle 42, an example of the first obtuse angle 42 is shown in Figure 3. There is also an outer arcuate surface 44 which extends from the input surface 28 to an outer side surface 46. The second body portion 32 also includes an upper arcuate surface 48 and a lower arcuate surface 50 which expand at a second obtuse angle 52 toward the output surface 34 as shown in Figures 4 and 5. Substantially parallel with the outer side surface 46 is an inner side surface 54, and the side surfaces 46,54 are substantially parallel with the input surface 28.

The front optics 16,18 are also substantially similar mirror images of one another when taken about the first axis 26, best seen in Figure 2. Each front optic 16,18 also includes a light receiving surface 56 which is part of a first body portion or quarter-cylindrical portion 58. The light receiving surfaces 56 of the front optics 16,18 are substantially perpendicular to the light input surfaces 28 of the side optics 12,14. The quarter-cylindrical portion 58 is formed as part of a second or frontal portion 60. The front optics 16,18 have a curved surface 62, best seen in Figures 2 and 8-11, which is formed as part of both the quarter-cylindrical portion 58 and the frontal portion 60, and is hyperbolic in shape. The frontal portion 60 also includes a light dispersing surface 64. The light dispersing surface 64 is substantially perpendicular to a middle outer surface 66. The middle outer surface 66 extends towards and transitions to the curved surface 62 at an intersection point 68. Also included is an angled inner surface 70. As best seen in Figure 2, the light dispersing surfaces 64 of each of the front optics 16,18 contact each other approximately at the first axis 26, and are substantially perpendicular to the first axis 26. Each of the angled inner surfaces 70 extends away from the output surfaces 64 at an inner angle 72 and contacts the light receiving surfaces 56.

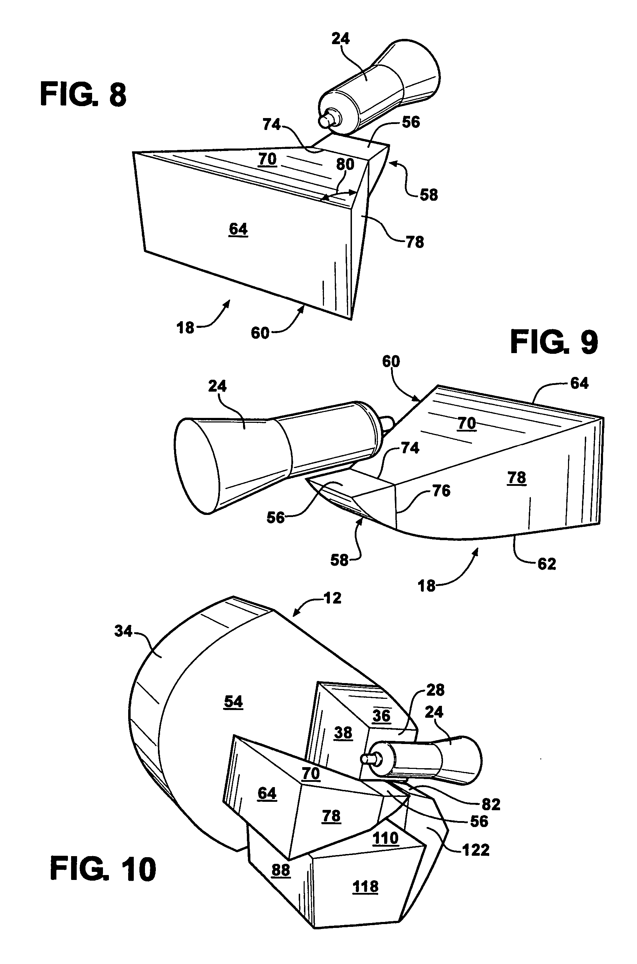

There is also a transition point 74 at the intersection between the light receiving surfaces 56 and the angled inner surfaces 70. Referring to Figure 2, a surface 76 is shown in phantom extending away from the edge of the light receiving surface 56 in a substantially perpendicular manner. The surface 76 is not part of the front optics 16,18, but rather represents the transition between the quarter-cylindrical portion 58 and the frontal portion 60, the portions 58,60 are formed as a single component. Each of the frontal portions 60 of the front optics 16,18 also include two angled outer surfaces 78 which extend away from the surface 76 at a second inner angle, shown in phantom at 80, from the light dispersing surface 64 towards the surface 76, best seen in Figure 8. The second inner angle 80 is taken when looking downwardly at the front optics 16,18. The configuration of the various surfaces 56,62,66,64,70,78 as described generates the shape of the front optics 16,18 as shown in the Figures. Light from the light source 24 is received by the light receiving surface 56 and is directed out of the light dispersing surface 64 by the quarter-cylindrical portion 58 and the frontal portion 60. Because of TIR, substantially all of the light which is received by the light receiving surface 56 will be reflected inside of the front optic 16,18 and directed out of the light dispersing surface 64.

The top and bottom optics 20,22 are also substantially mirror images of one another when viewed about the first axis 26 when looking at Figures 2, 6-7, and 11. The top and bottom optics 20,22 include a light entry surface 82 formed as part of a first body portion 84. The bottom optics 20,22 also have a second body portion 86, and both the first body portion 84 and second body portion 86 are formed as a single unit. The second body portion 86 also includes a light exit surface 88. The light entry surface 82 receives light from the light source 24, and the light is then directed from the light input surface 24 out of the light exit surface 88 by the first body portion 84 and the second body portion 86. The light entry surface 82 is not parallel to the axis 26, but is rather angled, as represented by a first input angle 90, where the first input angle 90 is taken along a reference line, shown in phantom at 92, with the reference line 92 being parallel to the axis 26. Located at another angle 94 relative to the light entry surface 82 is a first trapezoidal surface 96. The obtuse angles 98 of the first trapezoidal surface 96 are best seen in Figure 6. There is also a second trapezoidal surface 100 positioned at an angle 102 relative to the light entry surface 82 when looking at Figure 2. The obtuse angles 104 of the second trapezoidal surface 100 are best seen in Figure 7.

Also included is an outer arcuate surface 106 which extends from the second trapezoidal surface 100. The trapezoidal surface 100 also includes a height 108. The outer arcuate surface 106 is hyperbolic in shape, and is part of the first body portion 84. Extending away from the first trapezoidal surface 96 is an interior surface 110.

The light exit surface 88 is positioned at an angle 112 relative to the axis 26. The interior surface 110 of the second body portion 86 is also located at an angle 114 relative to the light exit surface 88 as shown in Figure 2. The interior surface 110 extends from the light exit surface 88 to the first trapezoidal surface 96 as shown in Figure 2. Also formed as part of the second body portion 86 is an exterior surface 116. The exterior surface 116 is substantially parallel to the axis 26, and extends from the light exit surface 88 to the outer arcuate surface 106. The second body portion 86 also includes frontal side surfaces 118 which are substantially adjacent to the exterior surface 116 and the interior surface 110. The exterior surface 116, interior surface 110, and frontal side surfaces 118 all extend from the light exit surface 88 to a rear surface 120. The first trapezoidal surface 96 extends away from the light entry surface 82 and contacts the rear surface 120 between the interior and exterior surfaces 110,116, best seen in Figure 7.

The top and bottom optics 20,22 also include two irregular surfaces 122, which are best shown in Figures 6 and 7. The irregular surfaces 122 extend from the light entry surface 82 to the first trapezoidal surface 96, the second trapezoidal surface 100, and the outer arcuate surface 106. The light entry surface 82, the first trapezoidal surface 96, the second trapezoidal surface 100, and the outer arcuate surface 106 all form the first body portion 84. The light exit surface 88, interior surface 110, exterior surface 116, and rear surface 120 form the second body portion 86.

The light input surfaces 28, the light receiving surfaces 56, and the light entry surfaces 82 act to receive substantially all of the light produced by the light source 24. Each of the optics 12,14,16,18,20,22 uses the principles of TIR to collect and direct the light out of each of the light output surfaces 34, the light dispersing surfaces 64, and light exit surfaces 88, respectively. Because almost all of the light from the light source 24 is collected, and each of the optics 12,14,16,18,20,22 operate using TIR principles, substantially all of the light from the light source 24 is collected and directed out of the lighting assembly 10.

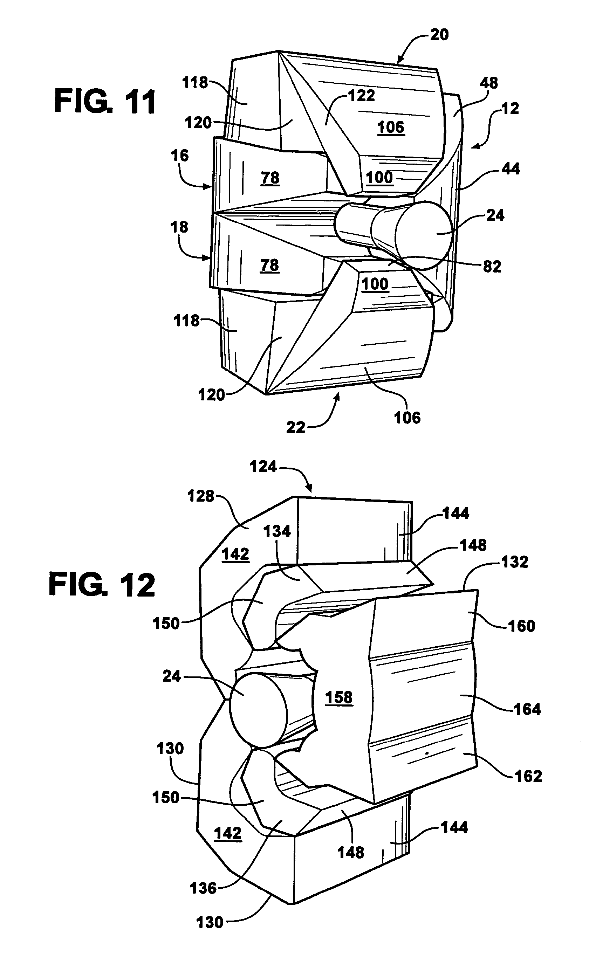

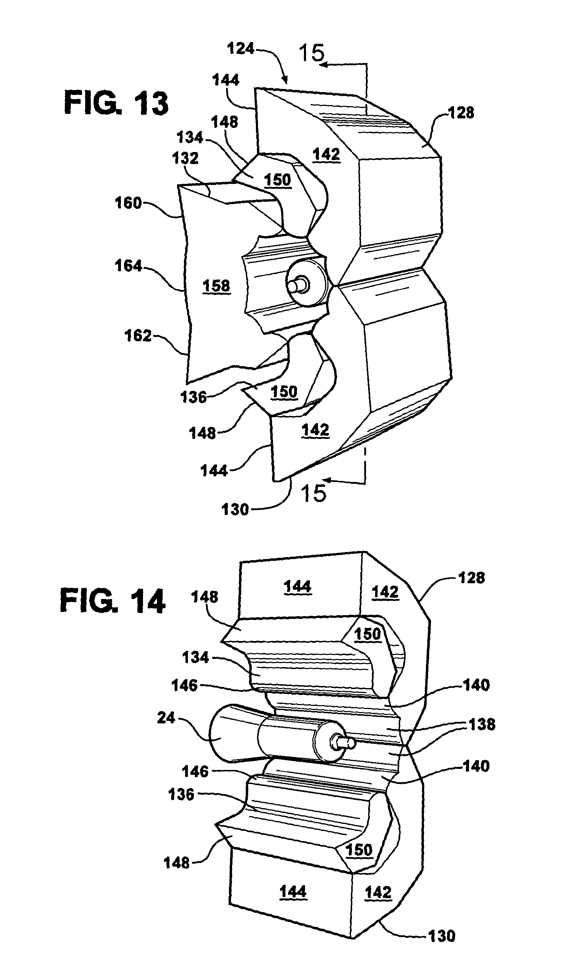

A second embodiment of the invention is another type of lighting assembly shown generally at 124 in Figures 12-15, which receives light from a light source, which is similar to the light source 24 as described in the first embodiment. The second embodiment 124 is substantially symmetrical about a horizontal axis 126, and includes a first upper optic 128 which is substantially similar to a first lower optic 130. There is also a central optic 132, and portions of the central optic 132 are disposed above and below the axis 126. Located between the portion of the central optic 132 disposed above the axis 126 and the first upper optic 128 is a second upper optic 134. Similarly, located between the portion of the central optic 132 disposed below the axis 126 and the first lower optic 130 is a second lower optic 136.

Both the first upper optic 128 and the first lower optic 130 have substantially similar geometry. Both include a first arcuate input surface 138 and a second arcuate input surface 140. Both of the input surfaces 138,140 receive light from the light source 24, the light is directed by a body portion 142 having multiple TIR surfaces out of an output surface 144.

Both the second upper optic 134 and second lower optic 136 have a single arcuate input surface 146, light is received from the light source 24 by the input surface 140, and is directed out of an output surface 148 by a body portion 150.

The central optic 132 has a plurality of input surfaces. The central optic 132 includes a first outer arcuate input surface 152, a second outer arcuate input surface 154, and a central arcuate input surface 156. The central optic 132 also includes a body portion 158, as well as an upper angled output surface 160, a lower angled output surface 162, and a central arcuate output surface 164. Light from the light source is received into the input surfaces 152,154,156, and the body portion 158 directs the light out of the output surfaces 160,162,164.

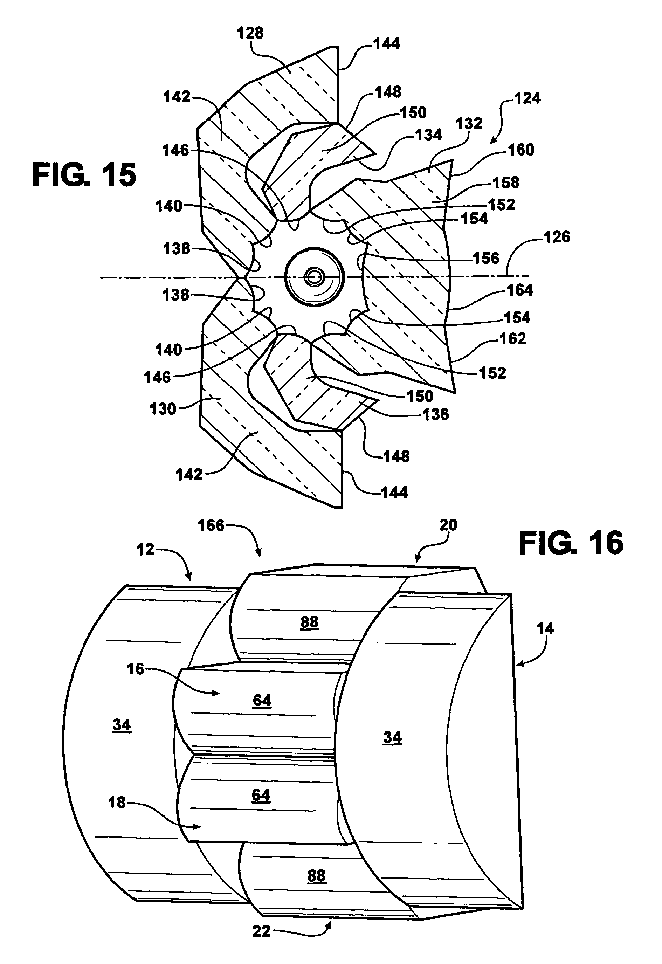

It can be seen from the cross-sectional view shown in Figure 15 that the input surfaces 138,140,146,152,154,156 of the optics 128,130,132,134,136 are all adjacent to one another such that substantially all of the light from the light source 24 is received into the input surfaces 138,140,146,152,154,156. Again, the lighting assembly 124 also uses the principles of TIR to produce a high-efficiency, high-power lighting. The light exits the respective output surfaces 144,148,160,162,164 to produce the desired beam pattern.

Figure 16 shows a third embodiment of the present invention, generally at 166, which is very similar to the first embodiment 10 shown in Figures 1-11, with like numbers referring to like elements. However, the output surfaces 34, dispersing surfaces 64, and exit surfaces 88 are curved to produce a different beam pattern compared to the beam pattern produced by the lighting assembly 10 of the first embodiment.

The lighting assembly 10 of the present invention has many different uses. For instance, the lighting assembly 10 is capable to be used as an automobile headlamp, an outdoor lamp for a parking lot, or any other application where a high-power, high-efficiency lamp is needed.

The description of the invention is merely exemplary in nature and, thus, variations that do not depart from the essence of the invention are intended to be within the scope of the invention. Such variations are not to be regarded as a departure from the spirit and scope of the invention.

## Claims

1. A lighting assembly, comprising:
a light source;
at least one optic;
at least one light input surface formed as part of said optic for receiving substantially all of the light produced from said light source; and
at least one light output surface formed as part of said optic such that light received into said optic by said at least one light input surface is directed by said optic out of said at least one light output surface to produce a desired beam pattern.

2. The lighting assembly of claim 1, said at least one optic further comprising:
a first side optic operable for receiving light from said light source;
a second side optic disposed on the opposite side of said light source as said first side optic, said second side optic operable for receiving light from said light source;
at least one front optic operable for receiving light from said light source, said at least one front optic at least partially disposed between said first side optic and said second side optic;
a top optic operable for receiving light from said light source, said top optic at least partially disposed between said first side optic and said second side optic; and
a bottom optic operable for receiving light from said light source, said bottom optic at least partially disposed between said first side optic and said second side optic.

3. The lighting assembly of claim 1, further comprising said at least one light output surface being of arcuate shape.

4. The lighting assembly of claim 1, wherein said at least one optic further comprises:
at least one upper optic positioned substantially above said light source, said at least one upper optic have a light input surface;
at least one lower optic positioned substantially below said light source, said at least one lower optic having a light input surface;
a central optic having a light input surface disposed between said at least one upper optic and said at least one lower optic such that substantially all of the light produced by said light source is received by said light input surface of said at least one upper optic, said light input surface of said at least one lower optic, and said light input surface of said central optic

5. The lighting assembly of claim 1, wherein said at least one optic provides total internal reflection of the light received from said at least one light source.

6. A lighting assembly, comprising:
a light source;
a first side optic having a light input surface operable for receiving light from said light source, and a light output surface operable for producing at least a portion of a desired beam pattern;
a second side optic having a light input surface operable for receiving light from said light source, and a light output surface operable for producing at least a portion of said desired beam pattern, said second side optic being disposed on an opposite side of said light source as said first side optic, and being operable for receiving light from said light source;
a first front optic having a light receiving surface operable for receiving light from said light source, and a light dispersing surface operable for producing at least a portion of said desired beam pattern, said first front optic being located substantially between a portion of said first side optic and a portion of said second side optic;
a second front optic having a light receiving surface operable for receiving light from said light source, and a light dispersing surface operable for producing at least a portion of said desired beam pattern, said second front optic being located substantially between a portion of said first side optic and a portion of said second side optic, said second front optic being substantially adjacent said first front optic;
a top optic having a light entry surface operable for receiving light from said light source, and a light exit surface operable for producing at least a portion of said desired beam pattern; and
a bottom optic having a light entry surface operable for receiving light from said light source, and a light exit surface operable for producing at least a portion of said desired beam pattern;
wherein said first side optic, said second side optic, said first front optic, said second front optic, said top optic, and said bottom optic receive light from said light source and substantially direct light from said light source to produce a desired beam pattern using total internal reflection (TIR), and said lighting assembly being substantially symmetrical about an axis.

7. The lighting assembly of claim 6, each of said first side optic and said second side optic further comprising:
first body portion, said light input surface being formed as part of said first body portion;
second body portion, said light output surface being formed as part of said second body portion, and said first body portion and said second body portion are formed as a single unit;
an inner side surface formed as part of said second body portion, said light output surface being substantially perpendicular to said inner side surface;
an outer side surface formed as part of said second body portion, said outer side surface being substantially perpendicular to said light output surface;
an outer arcuate surface formed as part of both of said first body portion and said second body portion, said outer arcuate surface extending from said light input surface to said outer side surface;
an upper arcuate surface formed as part of said second body portion, said upper arcuate surface extending from said outer arcuate surface to said light output surface;
a lower arcuate surface formed as part of said second body portion, said lower arcuate surface extending from said outer arcuate surface to said light output surface; and
a plurality of inclined surfaces formed as part of said first body portion, and extending from said light input surface to said inner side surface of said second body portion;
wherein said inner side surface, said outer side surface, said outer arcuate surface, said upper arcuate surface, said lower arcuate surface, and said plurality of inclined surfaces are operable to provide total internal reflection thereby directing substantially all of the light received by said light input surface to said light output surface.

8. The lighting assembly of claim 6, each of said first front optic and said second front optic further comprising:
a quarter-spherical portion, said light receiving surface formed as part of said quarter-spherical portion, and being parallel to said axis;
a frontal portion integrally formed with said quarter-spherical portion, said light dispersing surface formed as part of said frontal portion, and said light dispersing surface being substantially perpendicular to said axis;
a middle outer surface formed as part of said frontal portion, said middle outer surface being substantially perpendicular to said light dispersing surface;
a curved surface extending from said light receiving surface to said middle outer surface, said curved surface being formed as part of both of said quarter-spherical portion and said fontal portion;
an angled inner surface formed as part of said frontal portion on the opposite side of said frontal portion in relation to said curved surface, said angled inner surface extending from said light dispersing surface to said light receiving surface; and
a plurality of angled outer surfaces formed as part of said frontal portion and substantially adjacent said angled inner surface and said curved surface, each of said plurality of angled outer surfaces extending from said light dispersion surface to said light receiving surface;
wherein said middle outer surface, said curved surface, said angled inner surface, and said plurality of angled outer surfaces are operable to provide total internal reflection thereby directing substantially all of the light received by said light receiving surface to said light dispersing surface.

9. The lighting assembly of claim 6, each of said top optic and said bottom optic further comprising:
a first body portion, said light entry surface formed as part of said first body portion;
a second body portion integrally formed as part of said first body portion, said light exit surface formed as part of said second body portion;
a first trapezoidal surface formed as part of said first body portion, adjacent to and extending away from said light entry surface;
a second trapezoidal surface formed as part of said first body portion, adjacent to and extending away from said light entry surface;
an outer arcuate surface formed as part of said first body portion, adjacent to and extending away from said first trapezoidal surface towards said second trapezoidal surface;
an interior surface formed as part of said second body portion, said interior surface extending from said light exit surface to said second trapezoidal surface;
an exterior surface formed as part of said second body portion, said exterior surface extending away from said light exit surface towards and bordering said second trapezoidal surface and said outer arcuate surface;
a rear surface formed as part of said second body portion, said rear surface substantially being on the opposite side of said second body portion in relation to said light exit surface, and said rear surface extending from said interior surface to said exterior surface, and said first trapezoidal surface being in contact with said rear surface in and area between said interior surface and said exterior surface;
a plurality of frontal surfaces formed as part of said second body portion, said plurality of frontal surfaces being adjacent to said light exit surface, said interior surface, said exterior surface, and said rear surface; and
a plurality of irregular surfaces, each of said plurality of irregular surfaces being formed as part of said first body portion, at least one of said plurality of surface extending from said light entry surface to said first trapezoidal surface, said second trapezoidal surface, and said outer arcuate surface.
